# EUROPEAN PATENT SPECIFICATION

(11) **EP 1 379 375 B1**
(45) Date of publication and mention of the grant of the patent: **20.09.2006**
(21) Application number: 02702373.8
(22) Date of filing: 27.02.2002
(51) Int. Cl.: B29C 65/00

(54) **METHOD OF JOINING PREFABRICATED THERMAL INSULATED CONDUITS, THE JUNCTION ITSELF AND A LENGTH OF CONDUIT COMPRISING SAID JUNCTION**
VERFAHREN ZUR VERBINDUNG VON VORGEFERTIGTEN, WÄRMEISOLIERTEN ROHREN, DIE VERBINDUNG AN SICH UND EIN ROHRTEIL, DAS DIE BESAGTE VERBINDUNG ENTHÄLT
PROCÉDÉ DE JONCTIONNEMENT DES TUYAUX THERMIQUEMENT ISOLÉS PAR PREFABRICATION, LA JONCTION LA-MÊME ET UN TUYAUX COMPRENANT LADITE JONCTION

(30) Priority: 01.03.2001 US 797093
(43) Date of publication of application: 14.01.2004
(73) Proprietor: Lögstör Rör A/S, 9670 Lögstör (DK)
(72) Inventor: KIRKEGAARD, Kim, S., DK-9000 Aalborg (DK)
(74) Representative: Salonen, Esko Tapani
(86) International application number: PCT/EP2002/002080
(87) International publication number: WO 2002/070235

(56) References cited:
- WO-A-01/92776
- DE-A- 4 337 887
- GB-A- 625 022
- US-A- 3 731 710
- US-A- 5 900 195
- US-B1- 6 355 318

## Description

### FIELD OF THE INVENTION

The present invention relates to thermal insulated pipes for conveying various fluids and to thermal pre-insulated pipe systems, such as district heating and cooling pipe systems and steam and other industrial pipe systems, and more particularly to methods and components for joining such thermal pre-insulated pipes.

### BACKGROUND OF THE INVENTION

A typical thermal pre-insulated pipe or conduit is prefabricated and includes a fluid-conducting inner pipe surrounded by one or more tubular layers of thermal insulating material such as rigid polyurethane foam, which in turn is surrounded by an outer sleeve serving as a protective layer. These pipes are manufactured in predetermined lengths whose ends are joined as needed.

Prior to such junction a portion of the thermal insulation layer and the protective jacket on the end of each pipe to be joined is removed or omitted to expose an end portion of the inner pipe, usually made of steel, which extends axially beyond the end face of the insulating layer and jacket. These inner pipe ends are joined, usually by welding, with a tubular space remaining radially outward of the joined inner pipes and extending axially between the opposing end faces of the thermal insulating layers. This space is filled with new thermal insulating layer by various techniques, a common one being to encase the area with a sleeve-like collar and introduce therein thermal insulating material in fluid form which foams and hardens.

The welded junction of the steel inner pipes, the tubular section of new thermal insulating material, and the tubular collar encasing the section of new insulating material, are then covered by a protective sleeve which extends axially over and seals onto the original outer sleeve portions respectively of the joined conduits.

The prior art includes a variety of sealing techniques and materials of hot melt sealants, mastics, resins, adhesives, tapes and shrink-wraps to seal these junctions from intrusion of moisture or other contaminants which might damage the thermal insulating material or the inner pipe or enter the inner pipe. However, damage to the insulating material has been occurring before the junction is sealed, namely during the process of welding the inner pipes. Especially during gas welding of steel inner carrier pipes, the heat generated may cause liberation of chemical substances from the foam insulation material, thus damaging the insulating material and/or producing toxic gases which escape from the insulating material and present a hazard to the welder. Also from the welding process hot cinders or other particulate matter will melt or otherwise damage the insulating material.

Moving the end faces of the exposed foam insulating material farther from the weld zone has been considered; however, certain manufacturing and cost considerations due to well-established industry standards dictate maintaining this distance as short as possible. Thus, there is resistance in this industry to change in the length of the welding zone. One attempt to overcome this problem has been to apply end caps to cover the end faces of the insulating material during the welding process. However, standard end caps are insufficient to prevent escape of toxic gases from the insulation layer during the welding processes which form these insulated pipe junctions.

For more clearly and more conveniently describing these pipe junctions certain terminology will be used as follows. The exposed inner pipe has a "lead end" which is the terminal end welded to the lead end of a corresponding inner pipe. The exposed inner portion of the inner pipe also has a rear part where it meets and extends outward from the "end face" of the tubular layer of the insulating material that is exposed in a typical thermal insulated conduit. Adjacent and extending rearward of this end face is the "lead edge" of the tubular layer of heat insulating material and of the outer sleeve.

An end cap when used to cover or overlie the exposed "end face" of the thermal insulating layer includes a "face plate" which is the flat or bowed disc having a generally central aperture which has an "inner diameter" for receiving the exposed inner pipe. The face plate of such end cap has at its outer circumferential periphery an axially rearwardly extending "outer sleeve or flange" having an "outer diameter" that overlies the lead edge of the existing outer sleeve that covers the thermal insulating layer near its end face. Usually, there is at the periphery of the central aperture of the faceplate of the end cap a forwardly axially extending "inner sleeve or flange" that overlies the rear part of the exposed inner pipe. Because thermal insulated pipes are well standardized in sizes, an end cap, if economically viable, must have its central aperture sized to readily receive the lead end of the inner pipe and must have its outer flange sized to fit onto the lead edge of the original outer sleeve. An attempt to achieve an effective seal between the inner and outer sleeves of an end cap with an inner pipe and an outer sleeve respectively of a thermal insulation conduit, included use of circular rings or ribs on the respective sleeves extending radially inward. It has been found, however, that these couplings are not sufficiently tight and sealed. This is because of the dimensional clearances required in order for these prefabricated end caps and insulated conduits to readily slide one over the other when they are coupled. Thus, gaps occur with the result that toxic gases produced in the insulation layer from the welding stage frequently discharge from the end face of the thermal insulating foam, creating a hazard for the welder.

Techniques to better seal these pipe junctions, both during the welding and after the new insulation material is formed around the weld, are disclosed in numerous prior art patents, such as US patent No's 4,629,216; 4,514,241; 4,162,083; 5,002,716; 3,877,491; 4,610,740; and EP 0 708 290 A3. Prior art end caps are shown in Figs. 1-6 shown below.

### OBJECTS AND SUMMARY OF THE INVENTION

A principal object of the present invention is to provide a technique for joining thermal insulated pipe which both reduces or avoids contamination of, and escape of toxic gases from, the insulation associated with welding. It is a further object to provide a new pipe joining technique that allows retaining current standardized conduit compositions, retaining diameter and length dimensions of exposed inner pipe and retaining current welding procedures.

To achieve these objectives one approach is to cover and protect the exposed end face of the thermal insulation foam with plastic end caps that are custom fitted by plastic deformation at the time of installation to each pipe.

One method for such custom fitting is to utilize the inner pipe lead end itself to deform the central aperture in the end cap into a collar, to thus produce an exact interference fit between the collar and the inner pipe. A further and supplemental method is to select plastic material for the end cap which will heat shrink at both its outer and inner diameters, namely at its inner and outer sleeves to provide more secure seals.

Another objective is to select for the end cap plastic material that will expand at a predetermined temperature zone for said deformation. Suitable plastics include cross-linked and non-cross-linked PE, PP and PVDF, in addition to PTFE.

The new end caps and new joining procedure provide better protection of the insulation from welding heat and contaminants and reduce escape of toxic gases from the insulation, during welding and thereafter.

### BRIEF DESCRIPTION OF THE DRAWINGS

A more complete appreciation of the present invention and the advantages thereof will be readily understood by reference to the following detailed description, when considered in connection with the accompanying drawings in which:
Fig. 1 is a schematic elevation view of a prior art welding stage of joining pre-insulated pipes,
Fig. 2 is a schematic elevation view similar to Fig. 1 showing subsequent stages of joining pre-insulated pipes,
Fig. 3 shows schematically a first prior art pre-insulated end pipe installation,
Fig. 4 shows schematically a second prior art pre-insulated end pipe installation,
Fig. 5 shows schematically an end cap used in Fig. 3,
Fig. 6 shows schematically a variation of the end cap shown in Fig. 5,
Figs. 7-11 show schematic cross-sectional views of a sequence of steps of the pipe-joining method of the present invention, wherein,

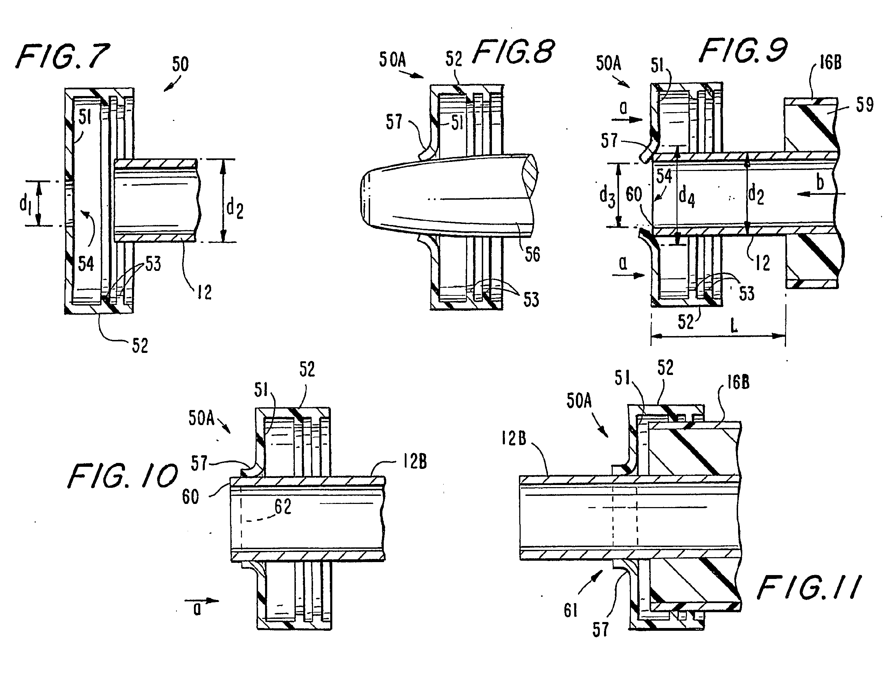

Fig. 7 shows schematically a preliminary step of the method of the new invention,
Fig. 8 shows schematically a step of initial deformation of the end cap by a mandrel in accordance with the invention,
Fig. 9 shows schematically a step of initial engagement of the end cap with an inner pipe in accordance with the invention,
Fig. 10 shows schematically a step of penetration by an inner pipe and further deformation of the end cap in accordance with the invention,

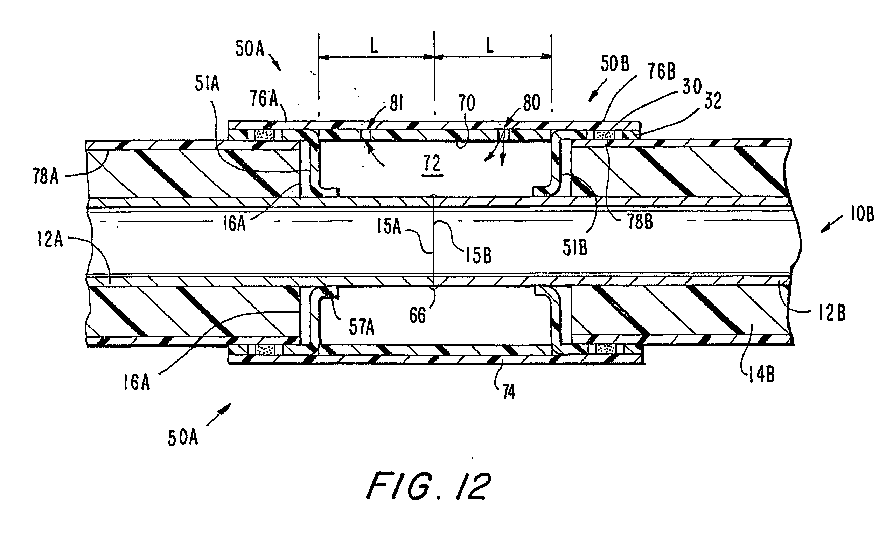

Fig. 11 shows schematically a completed installation of an end cap onto an inner pipe, and
Fig. 12 shows schematically a completed pipe junction using the new end caps.

### DETAILED DESCRIPTION OF THE PREFERRED EMBODIMENTS

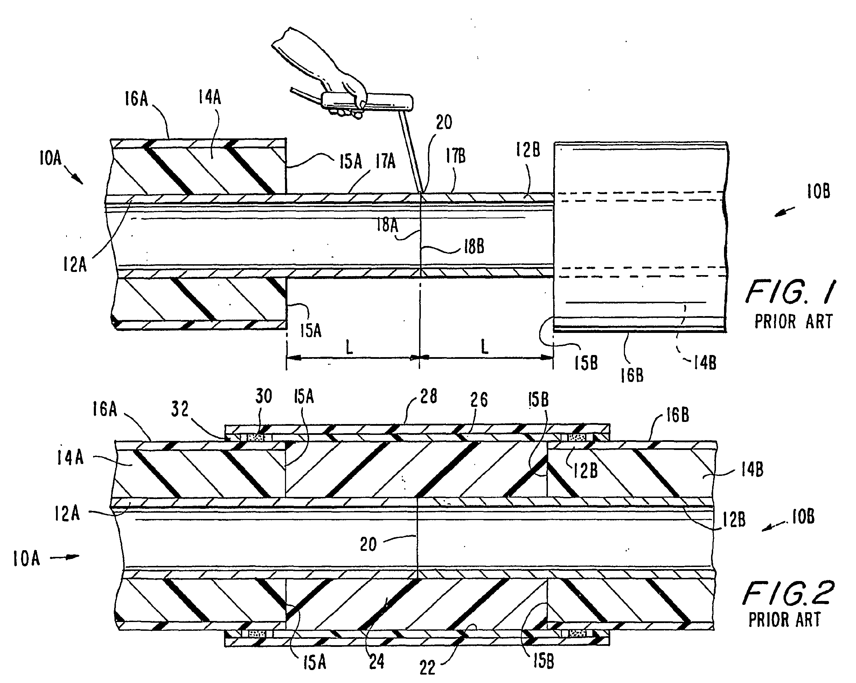

Referring now to the drawings, like reference characters designate identical or corresponding parts throughout the several views. To better describe this new invention, reference will first be made to Figs. 1-6 which illustrate various prior art pipe joining techniques and structural components. In Fig. 1 is shown an intermediate step in the joining of two heat insulated pipes 12A and 12B. A typical thermal insulated conduit 10A consists of a central inner pipe 12A of steel surrounded by a insulation layer 14A of polyurethane and similar insulation ("PUR") foam with its end face 15A and a protective outer sleeve 16A of plastic sheet such as high density polyethylene ("HDPE"). Coaxial with conduit 10A is corresponding conduit 10B with its inner pipe 12B, insulation layer 14B and outer sleeve 16B.

Inner pipes 16A and 16B respectively have exposed sections 17A and 17B and lead ends 18A and 18B which are joined at weld junction 20. The exposed sections 17A and 18A of the inner pipes each have length L, and the total length 2L for the two joined pipes is considered the welding heat zone extending between the exposed end faces 15A, 15B of the heat insulation foam. Despite a heat zone of about 150mm for gas welding and about 70mm for CO₂, heat and solid contaminants from the welding may travel into the insulation layers from which toxic gases are produced and escape into the welding zone.

Fig. 2 shows schematically a prior art junction of conduits 10A and 10B with weld joint 20 and tubular space 22 between end faces 15A, 15B filled with new insulation foamed-in material 24, which in turn is encased in a tubular collar or bridging sleeve 26, which may be formed of a pair of axially joined half-collars or by a mastic seal wrap. Encasing the collar 26 is a tubular segment 28 of plastic sheet which has supplemental seal elements of an annular hot melt 30 and a mastic outer seal 32.

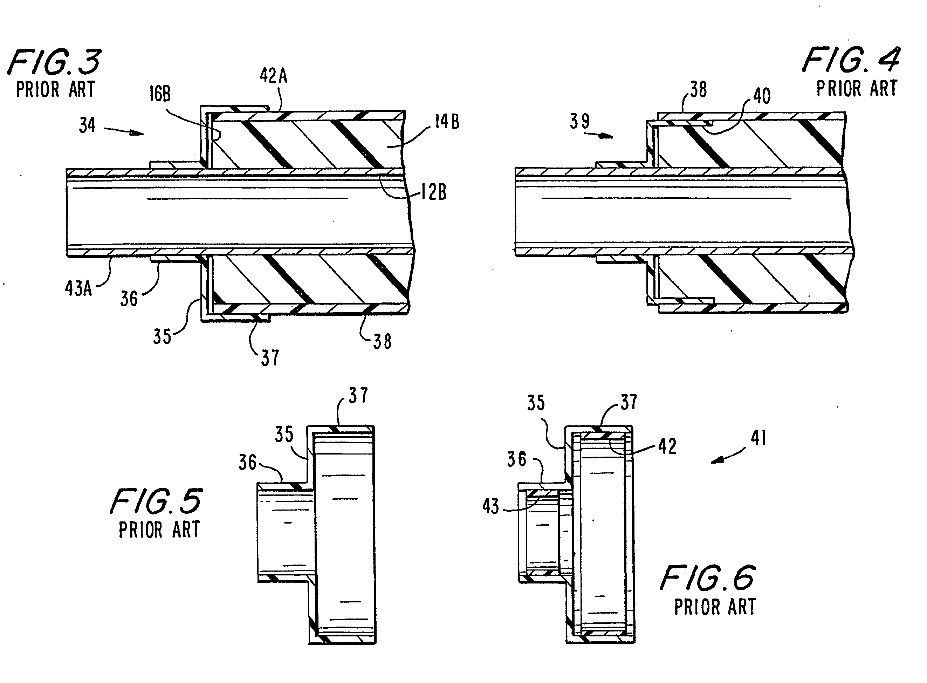

Figs. 3-6 show techniques of using a known end cap formed of PE, PP or other appropriate plastic intended to protect end face 16B of the insulating layer 14B from solid contaminants during welding. In Fig. 3 end cap 35 has radially extending face plate 35 with forwardly extending inner sleeve or flange 36 dimensioned to slip over a standard size of inner pipe 12B, and a rearwardly extending outer sleeve or flange 37 dimensioned to slip over the leading edge of a standard size of outer sleeve 38. Fig. 4 shows an end cap 39 similar to end cap 34 of Fig. 3, but with an outer sleeve 40 situated radially inward of outer sleeve 38.

Fig. 5 shows an end cap as used in Fig. 3 with its forward sleeve 36 and its rearward sleeve 37. Fig. 6 shows an alternative version of an end cap 41 for use with the heat insulation pipe of Fig. 3. In Fig. 6 this end cap has inward extending circumferential sleeve element 42 to sealingly engage the outer surface 42A of said outer sleeve in Fig. 3, and sleeve element 43 to sealingly engage the outer surface 43A of said inner pipe 12B in Fig. 3.

Figs. 7-11 illustrate a sequence of steps for forming a tapered collar 57 in an end cap blank 50 and subsequently further forming this tapered collar to sealingly fit onto an inner pipe of a heat insulated pipe section prior to joining it to another pipe section. The steps include: (a) beginning with an "initial end cap blank"; (b) forming it into a "final end cap blank" with a tapered collar; (c) coupling this final end cap blank into an inner pipe which extends through and expands the collar, thereby establishing a final end cap (also simply called "end cap") sealingly engaged to the inner pipe.

According to the invention, an initial end cap blank 50 is prefabricated of a plastic such as PE or PP to have a generally radially extending face plate 51, and a rearwardly extending outer sleeve 52 having radially inwardly directed seal rings 53. In the center of the face plate is a central aperture 54 whose diameter d₁ is less than the outer diameter d₂ of the inner pipe 12. Referring to Fig. 8, in accordance with the invention, a tapered mandrel 56 is axially inserted into and through the aperture 54 where it deforms the edges of the aperture into a tapered conical collar 57 having inner diameter d₃ which is greater than original diameter d₁, thus establishing final end cap blank 50A. Instead of the tapered mandrel, the actual carrier pipe may be used to deform the edges of the aperture into the tapered collar. This procedure could be illustrated schematically by Figs. 7, 9, 10 and 11, thus omitting the stage illustrated by Fig. 8. This expansion may be in the range of about 5-40% of the original diameter d₁. Such end caps are made with various standardized tapered collars 57 to be ready for application in the field or in a factory environment.

Fig. 9 shows an early stage of application in a field installation of one such new end cap blank 50A to an inner pipe 12 whose insulation layer 59 has been omitted or removed to expose length L of the central inner pipe 12. The tapered conical collar preformed in the step of Fig. 8 has an inner diameter d₃ less than the outer diameter d₂ of pipe 12; this collar has an outer diameter d₄ greater than the outer diameter d₂ of pipe 12. In this Fig. 9 the lead end 60 of the inner pipe 12 is axially aligned with aperture 54 and is urged axially in direction "a" into engagement with the tapered collar or lip 57 or, more practically, the end cap blank 50A is urged in direction "b", onto the lead end 60 of the inner pipe. With further axial urging seen in Fig. 10 the lead end 60 of pipe 12 further deforms the collar 57, now the end cap blank's inner sleeve, to have longer axial length and greater diameter.

Fig. 11 shows the inner pipe 12 to have fully penetrated the end cap blank 50A thus forming the final end cap. The tapered collar 57 is now sealingly form-fit onto the inner pipe 12 with a substantially gas impermeable seal along the surface region 61. The outer sleeve 52 of the end cap is snugly sealed to the outer sleeve 16B of the conduit in the usual manner. The expansion of the base by the mandrel alone or by the mandrel and subsequently by the inner pipe may be the range of about 5-40% of the original diameter d₁.

Fig. 12 illustrates a pair of the final end caps 50A, 50B as developed in Figs. 7-11 and now applied to a pair of lead ends 15A, 15B of inner pipes 12A, 12B joined at weld junction 66. The inner collar 57A of final end cap 50A, for example, is tightly sealed about the inner pipe 12A, and end face 16A is fully covered and protected by face plate 51A of the final end cap. The heat zone L + L is maintained the same as before to allow use of industry-standardized pipes. The tight seals created between the inner pipes and formed collars of the final end caps prevent the escape of toxic gases from the heat insulation layer during welding.

After a pair of final end caps 50A, 50B is installed onto the lead ends 15A, 15B of opposing inner pipes and the welding of the junction 66 has been completed, a collar 70 is positioned to encompass the annular space 72 between the face plates 51A, 51B of the opposing end caps. For convenience, such a collar may comprise a pair of axially split and hinged half-collars. Radial spacers, shoulders or other elements (not shown) may be used to accurately position such a collar about this annular space, and then heat insulating material is introduced by "foaming in" via inlet 80 with air outlet 81 or other known techniques. Finally, an outer protective sleeve 74 is positioned or wrapped about the bridging collar 70 with opposite end edges 76A, 76B overlying ends 78A, 78B of the original conduits where they are sealed circumferentially via known techniques and materials such as hot melt 30 and mastic 32.

To enhance the sealing fit of an end cap's inner sleeve 57 about the inner pipe 12B, and the end cap's outer sleeve 52 about the original outer sleeve 16B (see Figs. 10 and 11), various plastics may be selected because of special or unique characteristics regarding temperatures at which the plastic compositions expand and/or shrink, particularly during the steps when a collar is being formed in the end cap blank's face plate and the end cap blank is being coupled onto an inner pipe. These temperature-related properties become applicable at the time of initial deformation of the end cap blank as described with respect to the steps illustrated in Figs. 7 and 8, and at the time of final deformation into a sealing fit as described with respect to the steps illustrated in Figs. 9-11, as further described below.

These end cap blanks may, for example, be made from cross-linked ("C-L") or non-cross-linked ("N-C-L") PE, PP and/or PVDF or from PTFE, selected for the temperature at which each end cap blank will be expanded and deformed first by the mandrel and later by the inner pipe or expanded by the inner pipe only. The following are non-exclusive specific examples of end cap blank compositions and temperatures at which they are expanded.

| Material | Temperature |
|---|---|
| N-C-L PE | Below 120°C |
| N-C-L PP or PVDF | Below 160°C |
| PTFE | Below 260°C |
| C-L PE | Above 120°C |
| C-L PP or PVDF | Above 160°C |

The N-C-L end cap blanks which are expanded below specified temperatures will shrink spontaneously as the temperature rises to achieve a tight fit. The C-L end cap blanks which are expanded above specified temperatures will shrink to the desired fit as the temperature drops.

End cap blanks of the present invention are made by well known procedures, such as injection molding or blow molding, and have dimensions before deformation onto an inner pipe in the general range of:

| | |
|---|---|
| outer diameter (corresponding to jacket): | 60 mm to 1200 mm |
| inner diameter-bore | |
| (corresponding to carrier pipe): | 20 mm to 325 mm |
| wall thickness (end cap): | 0.4 mm to 5 mm |
| axial front flange length (at jacket diameter): | 5 mm to 100 mm |
| axial rear flange length (at carrier pipe): | 0 mm to 4 mm |

The end caps may be treated to enhance their protective capability by the appropriate coating or "grafting" to inhibit them from burning or melting due to the exposure of the welding operation.

With this new technique and end cap structure, the time, effort and cost to protect the heat insulation material during and after welding is reduced, while the effective protection against escape of toxic gases is enhanced. Furthermore, standard sizes of conduit, standard welding procedures and standard outer sealant can all be maintained without change, new cost or new learning requirements.

Obviously, numerous modifications and variations of the present invention are possible in light of the above teachings and disclosure. Accordingly, it is understood that other embodiments of the invention are possible within the scope of the claims appended hereto.

## Claims

1. A method of joining the ends of two thermal insulated conduits, each of which comprises an inner pipe (12) having an outer diameter surrounded by a tubular middle layer (59) of thermal insulating material, which is in turn surrounded by a jacket formed as a tubular outer layer, where said inner pipe (12) extends axially beyond said middle and outer layers, terminating in a lead end (60) and leaving exposed ends of said middle (59) and outer layers, comprising the steps:
a, providing for each of said conduits an initial end cap blank (50) comprising a generally radially extending face plate (51) with a central aperture (54) therein having diameter d1 and an outer flange (52) extending in a first axial direction,
b. applying force to said face plate (51) in the region of said central aperture (54) to form a tapered collar (57) extending in a second axial direction opposite said first axial direction, thereby forming a final end cap blank (50A),
c. aligning said lead end (60) of said inner pipe (12) with said tapered collar (57) in said final end cap blank (50A) and urging said final end cap blank (50A) onto said inner pipe (12), whereby said inner pipe lead end (60) expands and extends through said aperture (54) of said tapered collar (57), thereby forming a final end cap (50A) in tight sealing engagement with said lead end (60) of said inner pipe (12),
d. fixedly joining said lead ends (15A, 15B) of said inner pipes (12A, 12B) of said two conduits having final end caps (50A, 50B) attached thereto respectively to form a continuous conduit, with said respective final end caps (50A, 50B) being axially spaced apart and defining between them a tubular space (72),
e. positioning a tubular collar (70) about said tubular space (72), and
f. introducing into said tubular space (72) and sealing therein insulating material.

2. A method according to the claim 1 wherein step "b" comprises urging a mandrel (56) into said bore (54).

3. A method according to claim 1 wherein step "b" comprises urging said lead end (60) of said inner pipe (12) into said face plate (51) in the region of said central aperture end through said central aperture (54).

4. A method according to the claim 1 comprising said step of forming said initial end cap blank (50A) of a plastic having an elastic state below a specified temperature, and said steps b and c are conducted at temperatures below said specified temperature.

5. A method according to the claim 1 comprising said step of forming said initial end cap blank (50A) of a plastic having an elastic state above a specified temperature, and said step b and c are conducted at temperatures above said specified temperature.

6. A method according to claim 4 wherein said plastic is non-cross-linked PE and said specified temperature is 120 °C.

7. A method according to claim 4 wherein said plastic is non-cross-linked PP or PVDF and said specified temperature is 160 °C.

8. A method according to claim 4 wherein said plastic is cross-linked PE and said specified temperature is 120 °C.

9. A method according to claim 4 wherein said plastic is cross-linked PP or PVDF and said specified temperature is 160 °C.

10. A method according to claim 4 wherein said plastic is PTFE and said specified temperature is below 260 °C.

11. A method according to claim 1 wherein said step c comprises expanding said bore (54) about 5-40% larger than its original dimension d₁.

12. A method according to claim 1 wherein said steps b plus c comprise expanding said bore (54) about 5-40% larger than its original dimension d₁.

13. A method according to claim 1 wherein step f comprises using a sealant selected from the group comprising mastic, hotmelt, copolymers and mixtures thereof.

14. A method of claim 1, wherein the step of applying force to said face plate (51) in the region of said central aperture (54) to form a tapered collar (57) extending in a second axial direction opposite said first axial direction, thereby forming a final end cap blank (50A, 50B), is carried out by:
a. aligning said lead end (60) of said inner pipe (12) with said face plate (51) (hereinafter designated second element) in the region of said central aperture (54) of said second element,
b. urging one of said first and second elements toward the other, thus applying force to said second element in a second axial direction opposite said first axial direction, and thus forming in said second element a tapered collar (57) extending in said second axial direction.

15. A junction of two thermal insulated conduits, each of which comprises an inner pipe (12A, 12B) having an outer diameter surrounded by a tubular middle layer (14A, 14B) of thermal insulating material, which is in turn surrounded by a jacket formed as an tubular outer layer, where said inner pipe (12A, 12B) extends axially beyond said middle and outer layers, terminating in a lead end (60) and leaving exposed ends of said middle and outer layers, said junction comprising for each of said conduits an end cap (50) having a generally radially extending face plate (51) with a central aperture (54), an outer periphery, a flange (52) at said outer periphery extending in a first axial direction, and a collar (57) extending from said face plate (51) in a second axial direction opposite said first axial direction and generally coaxial with said aperture (54), with, said lead end (60) of said inner pipe (12) extending through said aperture (54) of said collar (57) in sealing engagement therewith and said outer flange (52) of said final end cap (50A) overlying closely said exposed end of said outer layer of said conduit, said lead ends (15A, 15B) of said inner pipes (12A, 12B) being welded together forming a continuous conduit, with their respective end caps (50A, 50B) being axially spaced apart and defining between them a tubular space (72), said junction further comprising a tubular collar (70) positioned about said tubular space (72), and thermal insulating material situated in said tubular space and sealed therein.

16. A junction according to claim 15 wherein said end cap (50) comprises a plastic having an elastic state below a specified temperature.

17. A junction according to claim 16 wherein said plastic is non-cross-linked PE and said specified temperature is 120 °C.

18. A junction according to claim 16 said plastic is non-cross-linked PP or PVDF and said specified temperature is 160 °C.

19. A junction according to claim 16 wherein said end cap (50) comprises a plastic having an elastic state above a specified temperature.

20. A junction according to claim 19 wherein said plastic is cross-linked PE and said specified temperature is 120 °C.

21. A junction according to claim 19 wherein said plastic is cross-linked PP or PVDF and said specified temperature is 160 °C.

22. A junction according to claim 16 wherein said plastic is PTFE and said specified temperature is below 260 °C.

23. A blank to be formed into an end cap (50) for a thermal insulated pipe to be used in a method according to claim 1 having an outer pipe diameter, said blank comprising a face plate (51) with a central aperture therein (54), and an inner tapered collar (57) extending from said central aperture (54) generally transverse to the plane of said face plate (51), said inner tapered collar (57) having a first inner diameter (d₄) adjacent said face plate (51) that is greater than said outer pipe diameter (d₂) and a second inner diameter (d₃) axially spaced from said face plate (51) that is less than said outer pipe diameter (d₂).

24. A blank according to claim 23 wherein said collar (57) has a central axis (b) generally perpendicular to the plane of said face plate (51).

25. A blank according to claim 23 wherein said collar (57) extends in a first axial direction and wherein said face plate (51) has an outer periphery and a flange (52) at said outer periphery extending in an axial direction opposite said first axial direction.

26. A length of thermal insulated conduit comprising (a) an inner pipe (12) having an outer diameter surrounded by a tubular middle layer (14) of thermal insulating material, which is in turn surrounded by a jacket formed as a tubular outer layer, where said inner pipe (12) extends axially beyond said middle and outer layers, terminating in a lead end (60), and said middle and outer layers terminate in exposed ends, and (b) an end cap blank (50) comprising a generally radially extending face plate (51) with a central aperture (54), an outer periphery, a flange (52) at said outer periphery extending in a first axial direction, and a collar (57) extending from said face plate (51) in a second axial direction opposite said first axial direction and generally coaxial with said aperture (54), said end cap blank (50) being positioned with said inner pipe lead end (12) extending axially through said collar (57) in said second axial direction, and with said face plate (51) situated adjacent said exposed ends of said middle and outer layers, and said collar (57) in tight sealing engagement with said inner pipe (12).

## Patentansprüche

1. Verfahren zum Verbinden der Enden zweier wärmeisolierter Leitungen, wovon jede ein Innenrohr (12) mit einem Außendurchmesser umfasst, der aus einer rohrförmigen Mittelschicht (59) aus wärmeisolierendem Material umgeben ist, das wiederum von einer Umhüllung umgeben ist, die als rohrförmige Außenschicht ausgebildet ist, wobei sich das Innenrohr (12) axial über die Mittel- und Außenschicht hinaus erstreckt, in einem vorderen Ende (60) endet und freiliegende Enden der Mittelschicht (59) und Außenschicht zurücklässt, folgende Schritte umfassend:
a. Bereitstellen, für jede der Leitungen, eines anfänglichen Endkappenrohlings (50), der eine sich allgemein radial erstreckende Abdeckplatte (51) mit einer darin ausgebildeten zentralen Öffnung (54) umfasst, die einen Durchmesser d1 und einen Außenflansch (52) hat, der sich in einer ersten axialen Richtung erstreckt,
b. Anlegen von Kraft an die Abdeckplatte (51) im Bereich der zentralen Öffnung (54), um einen sich verjüngenden Ansatz (57) zu bilden, der sich in einer zweiten axialen Richtung, der ersten radialen Richtung entgegengesetzt erstreckt, wodurch ein endgültiger Endkappenrohling (50) gebildet wird,
c. Ausrichten des vorderen Endes (60) des Innenrohrs (12) mit dem sich verjüngenden Ansatz (57) in dem endgültigen Endkappenrohling (50A) und zwangsweises Aufstecken des endgültigen Endkappenrohlings (50A) auf das Innenrohr (12), wodurch das innere vordere Rohrende (60) die Öffnung (54) des sich verjüngenden Ansatzes (57) aufweitet und sich durch dieses erstreckt, wodurch eine endgültige Endkappe (50A) in engem abdichtenden Eingriff mit dem vorderen Ende (60) des Innenrohrs (12) gebildet wird,
d. festes Verbinden der vorderen Enden (15A, 15B) der Innenrohre (12A, 12B) der beiden Leitungen mit den jeweils daran angebrachten endgültigen Endkappen (50A, 50B), um eine durchgehende Leitung zu bilden, wobei die jeweiligen endgültigen Endkappen (50A, 50B) axial voneinander beabstandet sind und zwischen sich einen rohrförmigen Raum (72) bilden,
e. Anlegen einer rohrförmigen Manschette (70) um den rohrförmigen Raum (72), und
f. Einführen und dichtes Einschließen von isolierendem Material in den bzw. im rohrförmigen Raum (72).

2. Verfahren nach Anspruch 1, wobei Schritt "b" umfasst, zwangsweise einen Dorn (56) in die Bohrung (54) einzustecken.

3. Verfahren nach Anspruch 1, wobei Schritt "b" umfasst, zwangsweise das vordere Ende (60) des Innenrohrs (12) durch die zentrale Öffnung (54) im Bereich der zentralen Öffnung in die Abdeckplatte (51) einzustecken.

4. Verfahren nach Anspruch 1, das den Schritt umfasst, den anfänglichen Endkappenrohling (50A) aus einem Kunststoff mit einem elastischen Zustand unter einer vorgegebenen Temperatur auszubilden, und die Schritte b und c bei Temperaturen unter der vorgegebenen Temperatur ausgeführt werden.

5. Verfahren nach Anspruch 1, das den Schritt umfasst, den anfänglichen Endkappenrohling (50A) aus einem Kunststoff mit einem elastischen Zustand über einer vorgegebenen Temperatur auszubilden, und die Schritte b und c bei Temperaturen über der vorgegebenen Temperatur ausgeführt werden.

6. Verfahren nach Anspruch 4, wobei es sich bei dem Kunststoff um unvernetztes PE und bei der vorgegebenen Temperatur um 120°C handelt.

7. Verfahren nach Anspruch 4, wobei es sich bei dem Kunststoff um unvernetztes PP oder PVDF und bei der vorgegebenen Temperatur um 160°C handelt.

8. Verfahren nach Anspruch 4, wobei es sich bei dem Kunststoff um vernetztes PE und bei der vorgegebenen Temperatur um 120°C handelt.

9. Verfahren nach Anspruch 4, wobei es sich bei dem Kunststoff um vernetztes PP oder PVDF und bei der vorgegebenen Temperatur um 160°C handelt.

10. Verfahren nach Anspruch 4, wobei es sich bei dem Kunststoff um PTFE handelt und die vorgegebene Temperatur unter 260°C liegt.

11. Verfahren nach Anspruch 1, wobei der Schritt c umfasst, die Bohrung (54) ca. 5 - 40% größer als ihre Ausgangsabmessung d₁ aufzuweiten.

12. Verfahren nach Anspruch 1, wobei der Schritt b und c umfassen, die Bohrung (54) ca. 5 - 40% größer als ihre Ausgangsabmessung d₁ aufzuweiten.

13. Verfahren nach Anspruch 1, wobei der Schritt f umfasst, ein Dichtungsmittel aus der Gruppe zu verwenden, die Mastix, Heißkleber, Copolymere und Gemische davon umfasst.

14. Verfahren nach Anspruch 1, wobei der Schritt des Anlegens von Kraft an die Abdeckplatte (51) im Bereich der zentralen Öffnung (54), um einen sich verjüngenden Ansatz (57) zu bilden, der sich in einer zweiten axialen Richtung, der ersten radialen Richtung entgegengesetzt erstreckt, wodurch ein endgültiger Endkappenrohling (50A, 50B) gebildet wird, durchgeführt wird durch:
a. Ausrichten des vorderen Endes (60) des Innenrohrs (12) mit der Abdeckplatte (51) (nachstehend als zweites Element bezeichnet) im Bereich der zentralen Öffnung (54) des zweiten Elements,
b. das erste oder zweite Element zwangsweise zum anderen hin zu führen, wodurch Kraft an das zweite Element in einer zweiten axialen Richtung, der ersten axialen Richtung entgegengesetzt angelegt wird, und somit Ausbilden eines sich verjüngenden Ansatzes (57) im zweiten Element, der sich in der zweiten axialen Richtung erstreckt.

15. Verbindungsstück für zwei wärmeisolierte Leitungen, wovon jede ein Innenrohr (12A, 12B) mit einem Außendurchmesser umfasst, der aus einer rohrförmigen Mittelschicht (14A, 14B) aus wärmeisolierendem Material umgeben ist, das wiederum von einer Umhüllung umgeben ist, die als rohrförmige Außenschicht ausgebildet ist, wobei sich das Innenrohr (12A, 12B) axial über die Mittel- und Außenschicht hinaus erstreckt, in einem vorderen Ende (60) endet und freiliegende Enden der Mittel- und Außenschicht zurücklässt, wobei das Verbindungsstück für jede der Leitungen eine Endkappe (50) mit einer sich allgemein radial erstreckenden Abdeckplatte (51) mit einer zentralen Öffnung (54), einen Außenumfang, einen sich am Außenumfang in einer ersten axialen Richtung erstreckenden Flansch (52), und einen sich von der Abdeckplatte (51) in einer zweiten axialen Richtung, der ersten axialen Richtung entgegengesetzten und mit der Öffnung (54) allgemein koaxialen Richtung erstreckenden Ansatz (57) umfasst, wobei das vordere Ende (60) des Innenrohrs (12) sich durch die Öffnung (54) des Ansatzes (57) in dichtendem Eingriff mit diesem erstreckt, und der Außenflansch (52) der endgültigen Endkappe (50A) eng über dem freiliegenden Ende der Außenschicht der Leitung liegt, wobei die vorderen Enden (15A, 15B) der Innenrohre (12A, 12B), die zusammengeschweißt sind, eine durchgehende Leitung bilden, wobei ihre jeweiligen Endkappen (50A, 50B) axial voneinander beabstandet sind und zwischen sich einen rohrförmigen Raum (72) bilden, das Verbindungsstück noch eine rohrförmige Manschette (70) umfasst, die um den rohrförmigen Raum (72) herum angelegt ist, und sich wärmeisolierendes Material in dem rohrförmigen Raum befindet und dicht darin eingeschlossen ist.

16. Verbindungsstück nach Anspruch 15, wobei die Endkappe (50) einen Kunststoff mit einem elastischen Zustand unter einer vorgegebenen Temperatur umfasst.

17. Verbindungsstück nach Anspruch 16,wobei es sich bei dem Kunststoff um unvernetztes PE und bei der vorgegebenen Temperatur um 120°C handelt.

18. Verbindungsstück nach Anspruch 16, wobei es sich bei dem Kunststoff um unvernetztes PP oder PVDF und bei der vorgegebenen Temperatur um 160°C handelt.

19. Verbindungsstück nach Anspruch 16, wobei die Endkappe (50) einen Kunststoff mit einem elastischen Zustand über einer vorgegebenen Temperatur umfasst.

20. Verbindungsstück nach Anspruch 19, wobei es sich bei dem Kunststoff um vernetztes PE und bei der vorgegebenen Temperatur um 120°C handelt.

21. Verbindungsstück nach Anspruch 19, wobei es sich bei dem Kunststoff um vernetztes PP oder PVDF und bei der vorgegebenen Temperatur um 160°C handelt.

22. Verbindungsstück nach Anspruch 16, wobei es sich bei dem Kunststoff um PTFE handelt und die vorgegebene Temperatur unter 260°C liegt.

23. Rohling, der zu einer Endkappe (50) für ein in einem Verfahren nach Anspruch 1 zum Einsatz beabsichtigten wärmeisolierten Rohr mit einem Außenrohrdurchmesser ausgebildet werden soll, wobei der Rohling eine Abdeckplatte (51) mit einer darin ausgebildeten zentralen Öffnung (54) und einen inneren, sich verjüngenden Ansatz (57) umfasst, der sich von der zentralen Öffnung (54) allgemein quer zur Ebene der Abdeckplatte (51) erstreckt, wobei der innere, sich verjüngende Ansatz (57) einen ersten Innendurchmesser (d₄) angrenzend an die Abdeckplatte (51) hat, der größer ist als der Außenrohrdurchmesser (d₂), und einen zweiten, von der Abdeckplatte (51) axial beabstandeten Innendurchmesser (d₃), der kleiner ist als der Außenrohrdurchmesser (d₂).

24. Rohling nach Anspruch 23, wobei der Ansatz (57) eine Mittelachse (b) hat, die allgemein senkrecht zur Ebene der Abdeckplatte (51) ist.

25. Rohling nach Anspruch 23, wobei sich der Ansatz (57) in einer ersten radialen Richtung erstreckt, und wobei die Abdeckplatte (51) einen Außenumfang und einen Flansch (52) an dem Außenumfang hat, der sich in einer axialen Richtung, der ersten axialen Richtung entgegengesetzt erstreckt.

26. Wärmeisoliertes Rohrstück mit (a) einem Innenrohr (12) mit einem Außendurchmesser, der von einer rohrförmigen Mittelschicht (14) aus wärmeisolierendem Material umgeben ist, das wiederum von einer Umhüllung umgeben ist, die als rohrförmige Außenschicht ausgebildet ist, wobei sich das Innenrohr (12) axial über die Mittel- und Außenschicht hinaus erstreckt, in einem vorderen Ende (60) endet, und die Mittel- und Außenschicht in freiliegenden Enden enden, und (b) einem Endkappenrohling (50) mit einer sich allgemein radial erstreckenden Abdeckplatte (51) mit einer zentralen Öffnung (54), einem Außenumfang, einem sich in einer ersten axialen Richtung am Außenumfang erstreckenden Flansch (52), und einem sich von der Abdeckplatte (51) in einer zweiten axialen Richtung, der ersten axialen Richtung entgegengesetzten und mit der Öffnung (54) allgemein koaxialen Richtung erstreckenden Ansatz (57), wobei der Endkappenrohling (50) so angeordnet ist, dass sich das vordere Ende (12) des Innenrohrs axial durch den Ansatz (57) in der zweiten axialen Richtung erstreckt, und wobei sich die Abdeckplatte (51) angrenzend an die freiliegenden Enden der Mittel- und Außenschicht und sich der Ansatz (57) in engem abdichtendem Eingriff mit dem Innenrohr (12) befindet.

## Revendications

1. Procédé d'assemblage des extrémités de deux conduits thermiquement isolés, chacun d'eux comprenant un tuyau intérieur (12) ayant un diamètre extérieur entouré par une couche centrale tubulaire (59) de matériau d'isolation thermique, qui est à son tour entourée par une chemise formée comme une couche extérieure tubulaire, dans lequel ledit tuyau intérieur (12) s'étend axialement au-delà desdites couches centrale et extérieure, se terminant dans une extrémité d'attaque (60) et laissant exposées les extrémités desdites couches centrale et extérieure, comprenant les étapes consistant à :
a. fournir pour chacun desdits conduits une ébauche de capuchon d'extrémité initiale (50) comprenant une plaque de face s'étendant généralement radialement (S1) avec une ouverture centrale (54) à l'intérieur ayant un diamètre d1 et une bride extérieure (52) s'étendant dans une première direction axiale,
b. appliquer une force sur ladite plaque de face (51) dans la région de ladite ouverture centrale (54) pour former un collier conique (57) s'étendant dans une seconde direction axiale opposée à ladite première direction axiale, formant ainsi une ébauche de capuchon d'extrémité finale (50A),
c. aligner ladite extrémité d'attaque (60) dudit tuyau intérieur (12) avec ledit collier conique (57) dans ladite ébauche de capuchon d'extrémité finale (50A) et poussant ladite ébauche de capuchon d'extrémité finale (50A) sur ledit tuyau intérieur (12), moyennant quoi ladite extrémité d'attaque (60) de tuyau intérieur se dilate et s'étend à travers ladite ouverture (54) dudit collier conique (57), formant ainsi un capuchon d'extrémité final (50A) en prise de scellement étanche avec ladite extrémité d'attaque (60) dudit tuyau intérieur (12),
d. joindre fixement lesdites extrémités d'attaque (15A, 15B) desdits tuyaux intérieurs (12A, 12B) desdits deux conduits ayant des capuchons d'extrémité finaux (50A, 50B) fixés à ceux-ci respectivement pour former un conduit continu, lesdits capuchons d'extrémité finaux (50A, 50B) respectifs étant axialement espacés et définissant entre eux un espace tubulaire (72),
e. positionner un collier tubulaire (70) autour dudit espace tubulaire (72), et
f. introduire dans ledit espace tubulaire (72) et sceller à l'intérieur le matériau d'isolation.

2. Procédé selon la revendication 1, dans lequel l'étape « b » comprend l'étape consistant à pousser un mandrin (56) dans ledit alésage (54).

3. Procédé selon la revendication 1, dans lequel l'étape « b » comprend l'étape consistant à pousser ladite extrémité d'attaque (60) dudit tuyau intérieur (12) dans ladite plaque de face (51) dans la région de ladite extrémité d'ouverture centrale à travers ladite ouverture centrale (54).

4. Procédé selon la revendication 1 comprenant ladite étape consistant à former ladite ébauche de capuchon d'extrémité initiale (50A) d'un plastique ayant un état élastique sous une température spécifiée, et lesdites étapes b et c sont réalisées à des températures sous ladite température spécifiée.

5. Procédé selon la revendication 1 comprenant ladite étape consistant à former ladite ébauche de capuchon d'extrémité initiale (50A) d'un plastique ayant un état élastique au-dessus d'une température spécifiée, et lesdites étapes b et c sont réalisées à des températures au-dessus de ladite température spécifiée.

6. Procédé selon la revendication 4, dans lequel ledit plastique est du PE non réticulé et ladite température spécifiée est 120°C.

7. Procédé selon la revendication 4, dans lequel ledit plastique est du PP ou PVDF non réticulé et ladite température spécifiée est 160°C.

8. Procédé selon la revendication 4, dans lequel ledit plastique est du PE réticulé et ladite température spécifiée est 120°C.

9. Procédé selon la revendication 4, dans lequel ledit plastique est du PP ou PVDF réticulé et ladite température spécifiée est 160°C.

10. Procédé selon la revendication 4, dans lequel ledit plastique est du PTFE et ladite température spécifiée est inférieure à 260°C.

11. Procédé selon la revendication 1, dans lequel ladite étape c comprend l'étape consistant à dilater ledit alésage (54) d'environ 5 à 40% de plus que sa dimension originale d₁.

12. Procédé selon la revendication 1, dans lequel lesdites étapes b et c comprennent l'étape consistant à dilater ledit alésage (54) d'environ 5 à 40% de plus que sa dimension originale d₁.

13. Procédé selon la revendication 1, dans lequel l'étape f comprend l'étape consistant à utiliser un produit d'étanchéité choisi dans le groupe constitué de mastic, matière thermoplastique, copolymères et mélanges de ceux-ci.

14. Procédé selon la revendication 1, dans lequel l'étape d'application d'une force sur ladite plaque de face (51) dans la région de ladite ouverture centrale (54) pour former un collier conique (57) s'étendant dans une seconde direction axiale opposée à ladite première direction axiale, formant ainsi une ébauche de capuchon d'extrémité finale (50A, 50B), est réalisée en :
a. alignant ladite extrémité d'attaque (60) dudit tuyau intérieur (12) avec ladite plaque de face (51) (ci-après dénommée second élément) dans la région de ladite ouverture centrale (54) dudit second élément,
b. pousser l'un desdits premier et second éléments vers l'autre, appliquant ainsi une force sur ledit second élément dans une seconde direction axiale opposée à ladite première direction axiale, et formant ainsi dans ledit second élément un collier conique (57) s'étendant dans ladite seconde direction axiale.

15. Jonction de deux tuyaux thermiquement isolés, chacun comprenant un tuyau intérieur (12A, 12B) ayant un diamètre extérieur entouré par une couche centrale tubulaire (14A, 14B) de matériau d'isolation thermique, qui est à son tour entourée par une chemise formée comme une couche extérieure tubulaire, dans laquelle ledit tuyau intérieur (12A, 12B) s'étend axialement au-delà desdites couches centrale et extérieure, se terminant dans une extrémité d'attaque (60) et laissant exposées les extrémités desdites couches centrale et extérieure, ladite jonction comprenant pour chacun desdits conduits un capuchon d'extrémité (50) ayant une plaque de face s'étendant généralement radialement (51) avec une ouverture centrale (54), une périphérie extérieure, une bride (52) à ladite périphérie extérieure s'étendant dans une première direction axiale, et un collier (57) s'étendent depuis ladite plaque de face (51) dans une seconde direction axiale opposée à ladite première direction axiale et généralement coaxiale avec ladite ouverture (54), avec ladite extrémité d'attaque (60) dudit tuyau intérieur (12) s'étendant à travers ladite ouverture (54) dudit collier (57) en prise de scellement avec celui-ci et ladite bride extérieure (52) dudit capuchon d'extrémité final (50A) chevauchant étroitement ladite extrémité exposée de ladite couche extérieure dudit conduit, lesdites extrémités d'attaque (15A, 15B) desdits tuyaux intérieurs (12A, 12B) étant soudées ensemble et formant un conduit continu, leurs capuchons d'extrémité (50A, 50B) respectifs étant axialement espacés et définissant entre eux un espace tubulaire (72), ladite jonction comprenant en outre un collier tubulaire (70) positionné autour dudit espace tubulaire (72), et le matériau d'isolation thermique situé dans ledit espace tubulaire et scellé à l'intérieur.

16. Jonction selon la revendication 15, dans laquelle ledit capuchon d'extrémité (50) comprend un plastique ayant un état élastique sous une température spécifiée.

17. Jonction selon la revendication 16, dans laquelle ledit plastique est du PE non réticulé et ladite température spécifiée est 120°C.

18. Jonction selon la revendication 16, dans laquelle ledit plastique est du PP ou PVDF non réticulé et ladite température spécifiée est 160°C.

19. Jonction selon la revendication 16, dans laquelle ledit capuchon d'extrémité (50) comprend un plastique ayant un état élastique au-dessus d'une température spécifiée.

20. Jonction selon la revendication 19, dans laquelle ledit plastique est du PE réticulé et ladite température spécifiée est 120°C.

21. Jonction selon la revendication 19, dans laquelle ledit plastique est du PP ou PVDF réticulé et ladite température spécifiée est 160°C.

22. Jonction selon la revendication 16, dans laquelle ledit plastique est du PTFE et ladite température spécifiée est inférieure à 260°C.

23. Ebauche devant être formée en un capuchon d'extrémité (50) pour un tuyau thermiquement isolé à utiliser dans un procédé selon la revendication 1 ayant un diamètre de tuyau extérieur, ladite ébauche comprend une plaque de face (51) avec une ouverture centrale (54) à l'intérieur, et un collier conique intérieur (57) s'étendant depuis ladite ouverture centrale (54) généralement transversale au plan de ladite plaque de face (51), ledit collier conique intérieur (57) ayant un premier diamètre intérieur (d₄) adjacent à ladite plaque de face (51) qui est supérieur audit diamètre de tuyau extérieur (d₂) et un second diamètre intérieur (d₃) axialement espacé de ladite plaque de face (51) qui est inférieur audit diamètre de tuyau extérieur (d₂).

24. Ebauche selon la revendication 23, dans laquelle ledit collier a un axe central (b) généralement perpendiculaire au plan de ladite plaque de face (51).

25. Ebauche selon la revendication 23, dans lequel ledit collier (57) s'étend dans une première direction axiale et dans laquelle ladite plaque de face (51) a une périphérie extérieure et une bride (52) au niveau de ladite périphérie extérieure s'étendant dans une direction axiale opposée à ladite première direction axiale.

26. Longueur de conduit thermiquement isolé comprenant (a) un tuyau intérieur (12) ayant un diamètre extérieur entouré par une couche centrale tubulaire (14) de matériau d'isolation thermique, qui est à son tour entourée par une chemise formée comme une couche extérieure tubulaire, où ledit tuyau intérieur (12) s'étend axialement au-delà desdites couches centrale et extérieure, se terminant dans une extrémité d'attaque (60), et lesdites couches centrale et extérieure se terminent dans des extrémités exposées, et (b) une ébauche de capuchon d'extrémité (50) comprenant une plaque de face s'étendant généralement radialement (51) avec une ouverture centrale (54), une périphérie extérieure, une bride (52) au niveau de ladite périphérie extérieure s'étendant dans une première direction axiale, et un collier (57) s'étendant depuis ladite plaque de face (51) dans une seconde direction axiale opposée à ladite première direction axiale et généralement coaxiale avec ladite ouverture (54), ladite ébauche de capuchon d'extrémité (50) étant positionnée avec ladite extrémité d'attaque (60) de tuyau intérieur s'étendant axialement à travers ledit collier (57) dans ladite seconde direction axiale, et avec ladite plaque de face (51) située à côté desdites extrémités exposées desdites couches centrale et extérieure, et ledit collier (57) étant en prise de scellement étanche avec ledit tuyau intérieur (12).
